# EUROPÄISCHE PATENTSCHRIFT

(11) **EP 1 520 315 B1**
(45) Veröffentlichungstag und Bekanntmachung des Hinweises auf die Patenterteilung: **16.03.2011**
(21) Anmeldenummer: 03740106.4
(22) Anmeldetag: 24.06.2003
(51) Int. Cl.: H01M 8/06, B05B 7/04

(54) **ZERSTÄUBUNGSANORDNUNG**
ATOMIZER DEVICE
DISPOSITIF ATOMISEUR

(30) Priorität: 03.07.2002 DE 10229871
(43) Veröffentlichungstag der Anmeldung: 06.04.2005
(73) Patentinhaber: ROBERT BOSCH GMBH, 70442 Stuttgart (DE)
(72) Erfinder: NAU, Michael, 72175 Dornhan/Aischfeld (DE); BAREIS, Marc, 71706 Markgroeningen (DE); ILGNER, Frank, 70499 Stuttgart (DE); HARNDORF, Horst, 34270 Schauenburg (DE)
(74) Vertreter: Körfer, Thomas
(86) Internationale Anmeldenummer: PCT/DE2003/002091
(87) Internationale Veröffentlichungsnummer: WO 2004/006373

(56) Entgegenhaltungen:
- WO-A-00/40856
- DE-A- 19 727 841
- US-A1- 2001 013 321

## Beschreibung

### Stand der Technik

Die Erfindung geht aus von einer Zerstäubungsanordnung nach der Gattung des Hauptanspruchs.

Bei brennstoffzellengestützten Transportsystemen kommen zur Gewinnung des benötigten Wasserstoffs aus kohlenwasserstoffhaltigen Kraftstoffen sog. chemische Reformer zum Einsatz.

Alle vom Reformer zum Reaktionsablauf benötigten Stoffe wie z.B. Luft.,- Wasser und Kraftstoff werden idealerweise dem Reformer in gasförmigem Zustand zugeführt. Da aber die Kraftstoffe , wie z.B. Methanol oder Benzin, und Wasser an Bord des Transportsystems vorzugsweise in flüssiger Form vorliegen, müssen sie erst, kurz bevor sie dem Reformer zugeführt werden, erhitzt werden, um sie zu verdampfen. Dies erfordert einen Vorverdampfer, der in der Lage ist, die entsprechenden Mengen an gasförmigem Kraftstoff und Wasserdampf zur Verfügung zu stellen, wobei meist die Abwärme des Reformers zur Verdampfung benutzt wird.

Da der Wasserstoff zumeist sofort verbraucht wird, müssen die chemischen Reformer in der Lage sein, die Produktion von Wasserstoff verzögerungsfrei, z.B. bei Lastwechseln oder Startphasen, an die Nachfrage anzupassen. Insbesondere in der Kaltstartphase müssen zusätzliche Maßnahmen ergriffen werden, da der Reformer keine Abwärme bereitstellt. Konventionelle Verdampfer sind nicht in der Lage, die entsprechenden Mengen an gasförmigen Reaktanden verzögerungsfrei zu erzeugen.

Es ist daher sinnvoll, den Kraftstoff, durch eine Zerstäubungseinrichtung, in feinverteilter Form in den Reformer einzubringen, wobei, bei ausreichendem Wärmeangebot, der Verdampfungsprozeß durch die hohe Oberfläche des feinverteilten Kraftstoffs verbessert wird.

Die WO 00/40856 zeigt die Merkmale des Oberbegriffs des Anspruchs 1 und beschreibt ein Verfahren und eine Vorrichtung zur Erhöhung der Verdampfung von flüssigen Brennstofftröpfchen durch Zuführung eines temperierten Luftstroms zum Brennstofftöpfchenstrom bevor das Brennstoff/Luft-Gemisches mit einem zusätzlichen Luftstrom zum Beispiel im Ansaugrohr eines Verbrennungsmotors kombiniert wird. Zur Erzeugung des Brennstofftröpfchenstroms wird einem herkömmlichen Brennstoffeinspritzventil Sauerstoff und Brennstoff zugeleitet und über Düsenöffnungen ausgespüht. Die Düsenöffnungen des Brennstoffeinspritzventils sind von einer Mischkammer umgeben, in die der temperierte Luft- und/oder Gasstrom eingeleitet wird. Die Temperatur dieses Luft- und/oder Gasstroms wird durch einen Heizer erhöht. Das Brennstoffeinspritzventil mit der Mischkammer setzt direkt am Ansaugspritzen an und führt das Luftbrennstoffgemisch über einen Turbulenz- und Mischgenerator in das Ansaugrohr ein.

In der US 2001/0013321 wird ebenfalls eine Brennstoffumwandlungs-Einheit mit einer Verdampfungskammer beschrieben. In die Verdampfungskammer werden Brennstoff und Wasser in Form von feinen Tröpfchen über eine Düse eingesprüht. Durch einen Lufteinlass wird Luft zugeführt, die das Tröpfchengemisches verwirbeln. Zusätzlich erhitzt ein Heizer das Gemisch, sodass eine Umwandlung in Wasserstoff und Luft angestoßen wird. Der erzeugte Wasserstoff/Luftgemisch wird über einen Auslass dem Verbrennungsmotor zugeleitet.

Desweiteren sind aus der US 3,971,847 Vorrichtungen zur Reformierung von Kraftstoffen bekannt. Der Kraftstoff wird hierin von vom Reformer relativ weit entfernten Zumeßeinrichtungen über lange Zuführungsleitungen in einen temperierten Stoffstrom zugemessen und über eine Dosieröffnung am Ende der Zuführungsleitung in den Stoffstrom verteilt, welcher zum Ort des eigentlichen Reformierprozesses strömt.

Nachteilig bei den aus der obengenannten Druckschrift bekannten Vorrichtungen ist insbesondere, daß die langen Zuführungsleitungen zu Verzögerungen und Ungenauigkeiten im Zumessen von Kraftstoff führen, insbesondere bei starken Lastwechseln oder Warmstartphasen. Wird beispielsweise nach einer Stopphase, während der Kraftstoff durch die Temperatureinwirkung aus der Zuführungsleitung verdampft, die Kraftstoffzumessung wieder aufgenommen, so kommt es zu verzögerter Eindosierung von Kraftstoff in den temperierten Stoffstrom und zum Reformierungsprozeß durch das zunächst wieder aufzufüllende Totraumvolumen in der Zuführungsleitung. Das gleiche Problem ergibt sich bei besonders geringer Last. Im Weiteren stehen lange Zuführungsleitungen einer kompakten Bauweise entgegen, erhöhen die Fehleranfälligkeit und den Montageaufwand. Der Einsatz von hohen Kraftstoffdrücken zur besseren

Zerstäubung, hat direkten Einfluß auf die zudosierte Kraftstoffmenge.

### Vorteile der Erfindung

Die erfindungsgemäße Zerstäubungsanordnung mit den Merkmalen des Hauptanspruchs hat demgegenüber den Vorteil, daß durch die direkte Zumessung von Kraftstoff durch die Zumeßeinrichtung ohne Zwischenanordnung einer Zuführungsleitung, die Menge und der zeitliche Verlauf der Zumessung von Kraftstoff in den temperierten Stoffstrom, weit besser und genauer, über alle Betriebszustände des Reformers hinweg, bestimmt und gesteuert werden kann. Weiterhin wird durch die thermische Isolierung der Zumeßeinrichtung von der Aufnahmevorrichtung durch einen ersten Spalt, eine thermische Überlastung der Zumeßeinrichtung sicher vermieden. von

Durch die in den Unteransprüchen aufgeführten Maßnahmen sind vorteilhafte Weiterentwicklungen der im Hauptanspruch angegebenen Zerstäubungsanordnung möglich.

Vorteilhafterweise weist die Zumeßeinrichtung mehrere Öffnungen zum Zumessen von Kraftstoff in den temperierten Stoffstrom auf. Dadurch kann die Zumessung von Kraftstoff vorteilhafter auf die Strömungsverhältnisse des temperierten Stoffstroms im Mischbereich abgestimmt werden, womit die Verteilung des Kraftstoffes im Stoffstrom optimiert wird.

Vorteilhafterweise wird als Zumeßeinrichtung ein Brennstoffeinspritzventil eingesetzt, wie es z.B. von Hubkolbenmaschinen mit innerer Verbrennung bekannt ist. Der Einsatz solcher Ventile hat mehrere Vorteile. So lassen sie eine besonders genaue Steuerung bzw. Regelung der Kraftstoffzumessung zu, wobei die Zumessung über mehrere Parameter, wie z.B. Tastverhältnis, Taktfrequenz und ggf. Vordruck, gesteuert werden kann. Dabei ist die Abhängigkeit der Zumessung vom Pumpendruck weit weniger ausgeprägt als bei Zumeßeinrichtungen, die über den Leitungsquerschnitt den Volumenstrom des Kraftstoffes regeln und der Dosierbereich ist deutlich größer. Darüber hinaus sind besagte Brennstoffeinspritzventile vielfach bewährte, in ihrem Verhalten bekannte, relativ kostengünstige, gegenüber den verwendeten Kraftstoffen chemisch stabile und zuverlässige Bauteile mit hoher Lebensdauer. Vorteilhafterweise werden Hochdruckbrennstoffeinspritzventile eingesetzt, da diese mit hohem Kraftstoffdruck den Kraftstoff besonders fein zerstäuben, gegenüber Druckschwankungen im System besonders unempfindlich sind und die Geometrie der eingespritzten Kraftstoffwolke hervorragend beeinflußbar ist. Da diese Ventile bei dem Einsatz in Hubkolbenmaschinen mit innerer Verbrennung in der Regel sehr nahe am Verbrennungsprozeß angebracht sind, insbesondere bei direkter Einspritzung in den Brennraum, sind sie temperaturbeständig gegenüber relativ hohen Temperaturen. Die bereits heute hohe Produktionsstückzahl von Hochdruckbrennstoffeinspritzventilen senkt die Produktionskosten für den Einsatz in chemischen Reformern.

Die Isolierung durch einen Isolierkörper, insbesondere einen keramischen Isolierkörper ist besonders vorteilhaft. Vorteilhaft kann die Erfindung dadurch weitergebildet werden, dass erste Spalt der zwischen Zumeßeinrichtung und Isolierkörper verläuft. Der Spalt dient der Wärmeisolation.

Vorteilhafterweise berührt der Isolierkörper die Zumeßeinrichtung lediglich zur Führung, um eine Auslenkung der Zumeßeinrichtung gegenüber seiner Lage zu einer Achse zu verhindern. Dabei sind die übertragenen Kräfte, und dadurch der Wärmeübergang zwischen Isolierkörper und Zumeßeinrichtung an den Berührungsstellen relativ gering.

Eine vorteilhafte Weiterbildung ist weiterhin dadurch möglich, daß die Aufnahmevorrichtung aus einem Gehäuse und einem Gehäuseoberteil besteht, also zweiteilig ist, wobei sich die beiden Teile nur mittelbar berühren, beispielsweise über den Isolierkörper. Vorteilhafterweise ist das Gehäuseoberteil dabei durch einen zweiten, Spalt vom thermisch höher belasteten Gehäuse isoliert.

Eine weitere vorteilhafte Weiterbildung ergibt sich bei einer Fixierung von Gehäuse und Gehäuseoberteil durch Fixierelemente, wobei es dadurch möglich ist, die Fixierelement durch Isolationselemente gegen Gehäuse und/oder Gehäuseoberteil thermisch zu isolieren. Die Isolationselemente können zudem vorteilhafterweise wenigstens teilweise aus einem keramischen Material bestehen.

Vorteilhaft ist es weiterhin, wenn die Zumeßeinrichtung lediglich auf dem Gehäuseoberteil der Aufnahmevorrichtung tragend aufliegt, und beispielsweise nicht auf dem Gehäuse, wobei vorteilhafterweise eine dritte Dichtung, vorzugsweise zumindest teilweise aus einem Elastomer gefertigt, zwischen Zumeßeinrichtung und Gehäuseoberteil den ersten Spalt abdichtet.

Die erfindungsgemäße Zerstäubungsanordnung kann außerdem dadurch vorteilhaft weitergebildet werden, daß die Zumeßeinrichtung Kraftstoff in einen Mischbereich einmißt, wobei der temperierte Stoffstrom über eine Zuleitung dem Mischbereich vorteilhafterweise radial oder zumindest teilweise tangential zugeführt werden kann. Eine Drallausbildung und dadurch eine bessere Verwirbelung des Kraftstoffs im temperierten Stoffstrom wird dadurch begünstigt.

Eine übermäßige Wärmezufuhr zur Zumeßeinrichtung kann vermieden und ein günstigerer Strömungsverlauf im Mischbereich kann erreicht werden, indem die Strömungsrichtung des temperierten Stoffstroms bei Eintritt in den Mischbereich von der Zumeßeinrichtung weggerichtet ist, wobei beispielsweise der Winkel zwischen der verlängert gedachten Längsachse der Zumeßeinrichtung und der Eintrittsrichtung des temperierten Stoffstroms in den Mischbereich weniger als 90° beträgt.

Eine übermäßige Wärmeleitung und Wärmeaufnahme kann vorteilhafterweise durch einen im Gehäuse verlaufenden Einstich, der beispielsweise nach dem Mischbereich oberhalb der Strömungsrichtung des temperierten Stoffstroms verläuft, vermieden werden.

Wird vorteilhafterweise die Aufnahmevorrichtung so gestaltet, daß ihre Außenfläche ausgehend von dem heißen, dem Reformer zugewandten Strömungsaustritt in den Reformer zunimmt, so wird die Wärmeaufnahme aus dem Reformer begrenzt und die Wärmeabgabe in dem dem Strömungsaustritt abgewandten Teil der Aufnahmevorrichtung begünstigt.

Nimmt die Außenfläche der Aufnahmevorrichtung ab einem Mischbereich, entgegen der in ihm vorherrschenden Strömungsrichtung des temperierten Stoffstroms bzw. Gemisches aus Kraftstoff und temperierten Stoffstroms zu, so wird die Wärmeaufnahme der Aufnahmevorrichtung aus dem temperierten Stoffstroms heraus begrenzt und die Wärmeabgabe in dem der vorherrschenden Strömungsrichtung abgewandten Teil der Aufnahmevorrichtung begünstigt.

### Zeichnung

Ein Ausführungsbeispiel der Erfindung ist in den Zeichnungen vereinfacht dargestellt und in der nachfolgenden Beschreibung näher erläutert. Es zeigen:
- Fig. 1: eine schematische Schnittdarstellung eines Ausführungsbeispiels einer erfindungsgemäßen Zerstäubungsanordnung,
- Fig. 2: eine schematische Darstellung des Ausführungsbeispiels von Fig. 1 um ca. 90° gedreht in der Außenansicht,
- Fig.3: eine schematische Darstellung des Ausführungsbeispiels als Außenansicht im Bereich des Gehäuseoberteils,
- Fig. 4: eine schematisch Schnittdarstellung des Ausführungsbeispiels im Bereich des Gehäuseoberteils.

### Beschreibung des Ausführungsbeispiels

Nachfolgend wird ein Ausführungsbeispiel der Erfindung beispielhaft beschrieben. Übereinstimmende Bauteile sind dabei in allen Figuren mit übereinstimmenden Bezugszeichen versehen.

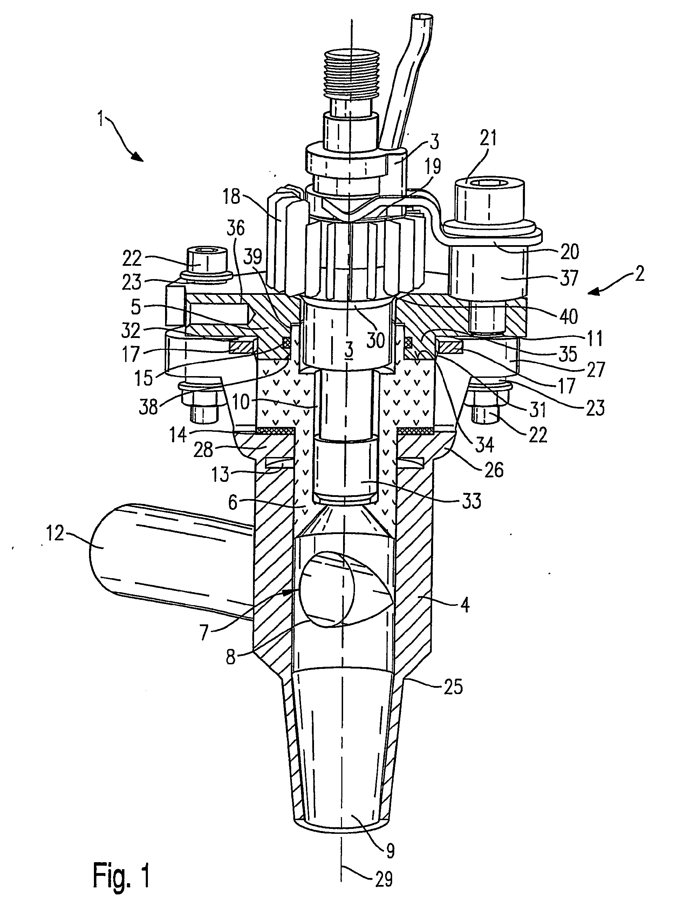

Ein in Fig. 1, 2, 3 und 4 dargestelltes Ausführungsbeispiel einer erfindungsgemäßen Zerstäubungsanordnung 1 ist in der Form einer Zerstäubungsanordnung 1 für die Verwendung von Hochdruckbrennstoffeinspritzventilen ausgeführt. Die Zerstäubungsanordnung 1 eignet sich insbesondere zum Eintrag und zur Zerstäubung von Kraftstoff in einen nicht dargestellten chemischen Reformer zur Gewinnung von Wasserstoff.

Die in Fig. 1 dargestellte Zerstäubungsanordnung 1 besteht im wesentlichen aus einer Aufnahmevorrichtung 2 zur Aufnahme einer Zumeßeinrichtung 3, welche in diesem Ausführungsbeispiel in der Form eines Hochdruckbrennstoffeinspritzventils ausgeführt ist.

Die Aufnahmevorrichtung 2 besteht aus einem rohrähnlichen Gehäuse 4 mit einem am unteren Ende angeordneten Strömungsaustritt 9, durch welchen ein beispielsweise mit Benzin angereicherter auf 450°C temperierter Stoffstrom, bestehend aus z.B. Luft und Wasserdampf, einem nicht dargestellten chemischen Reformer zugeführt wird. Vom Strömungsaustritt 9 nach oben, entgegen der Abspritzrichtung der Zumeßeinrichtung 3, erweitert sich der Außendurchmesser des Gehäuses 4, bei gleichbleibender Wandstärke, zuerst konisch. Ein dann folgender stark konisch verlaufender erster Durchmesserabsatz 25 erweitert den Durchmesser des Gehäuses 4 weiter in einen dann nach oben folgenden zylinderförmigen Abschnitt mit erhöhter Wandstärke, welcher in einen zweiten Durchmesserabsatz 26 endet. Der zweite außendurchmesservergrößernde Durchmesserabsatz 26 ist im äußeren Verlauf abgerundet und bildet im Inneren des Gehäuses 4 eine Innenschulter 28 durch die auch der Innendurchmesser des Gehäuses 4 aufgeweitet ist.

Unterhalb des zweiten Durchmesserabsatzes 26 befindet sich im Gehäuse ein Einstich 13, welcher den Innendurchmesser des Gehäuses 4 über einen relativ kurzen Bereich stark erweitert. Er dient zur Verbesserung der Wärmeisolation zwischen dem Teil des Gehäuses 4 unterhalb des Durchmesserabsatzes 26 gegenüber dem Teil des Gehäuses 4 oberhalb des Durchmesserabsatzes 26. Vom zweiten Durchmesserabsatz 26 nach oben nimmt der Außendurchmesser des Gehäuses 4 zunächst wieder konisch zu, um dann in einen dritten Durchmesserabsatz 27 zu enden. Dem nach der Innenschulter 28 nach oben folgende zylindrische aufgeweitete Bereich des Innendurchmessers des Gehäuses 4, schließt sich am oberen Ende des Gehäuses 4 innen eine Fase 31 an, die, den Innendurchmesser des Gehäuses 4 weiter leicht aufweitend, in einer innendurchmessererweiternde Aussparung 32 endet, in der ein ringförmiges Stützelement 17 eingelegt ist. Das Stützelement 17 nimmt radial nach innen auf den oberen Teil des Gehäuses 4 wirkende Kräfte auf und besteht beispielsweise aus Stahl.

Ein Isolierkörper 6 fügt sich den radialsymmetrischen Innenformen im oberen Bereich des Gehäuses 4 mit relativ geringem Spiel paßgenau an, wobei er über eine ringscheibenförmige Dichtung 14, die beispielsweise aus Reingraphit besteht und eine Streckmetalleinlage aufweist, auf der Innenschulter 28 zu tragen kommt. Der Isolierkörper 6 erstreckt sich entlang einer Achse 29, deren Verlauf etwa der Abspritzrichtung der Zumeßeinrichtung 3 gleicht, von unten, in etwa der Mitte des zylinderförmigen Abschnitts des Gehäuses 4 mit vergrößerter Wandstärke, bis in etwa der Höhe des dritten Durchmesserabsatzes 27, wobei der Isolierkörper 6, etwa in Höhe der Mitte der Fase 31, in einen dünnwandigen Außendurchmessereinzug übergeht und dadurch eine dritte Schulter 34 bildet. Der Isolierkörper 6 weist eine entlang der Achse 29 durchgehende Öffnung auf, welche im Verlauf einen zumeist gleichbleibenden Innendurchmesser aufweist. Im oberen Bereich weist die Öffnung jedoch eine Innendurchmesservergrößerung auf und an der unteren Öffnung, welche dem abspritzseitigen Teil der Zumeßeinrichtung 3 zugeordnet ist, in Richtung des Strömungsaustrittes 9, zuerst einen öffnungsverkleinernden Einzug, der sich unmittelbar danach nach unten wieder öffnet und sich dann konisch bis fast zum vollen Außendurchmesser des unteren Bereichs des Isolierkörpers 6 erweitert.

Die durchgehende Öffnung des Isolierkörpers 6 umfaßt in etwa die untere, abspritzseitige Hälfte der Zumeßeinrichtung 3 unter weitgehender Einbehaltung eines weitgehend gleichmäßig verlaufenden ersten Spaltes 10. Isolierkörper 6 und Zumeßeinrichtung 3 berühren sich dabei nur in einer nahe am unteren Ende der Zumeßeinrichtung 3 liegenden Durchmesservergrößerung 33 der Zumeßeinrichtung 3. Diese Durchmesservergrößerung 33 dient zur Führung der Zumeßeinrichtung 3 bei Montage und Betrieb. Die Zumeßeinrichtung 3 liegt mit ihrem unteren abspritzseitigen Ende idealerweise nicht auf dem Isolierkörper 6 auf. Die Zumeßeinrichtung 3 spritzt Kraftstoff durch eine nicht dargestellte Abspritzöffnung am unteren abspritzseitigen Ende der Zumeßeinrichtung 3 in einen zwischen der nicht dargestellten Abspritzöffnung und dem Strömungsaustritt 9 im Gehäuse 4 liegenden Mischbereich 7, idealer-weise fein verteilt, mit geringem Sauterdurchmesser und evtl. drallbehaftet, in den durch den Mischbereich 7 strömenden temperierten Stoffstrom, welcher durch eine Zuleitung 12 dem Mischbereich 7 durch einen seitlich zwischen erstem und zweitem Durchmesserabsatz 25, 26 befindlichen Strömungseintritt 8 zugeführt wird, ein.

Die gedachte Verlängerung der Längsachse der Zuleitung 12 ist im Mischbereich 7, abweichend von einem rechten Winkel zur Achse 29, zum Strömungsaustritt 9 hin geneigt. Dadurch werden der abspritzseitige Teil der Zumeßeinrichtung 3 und der Isolierkörper 3 von den thermischen Wirkungen des temperierten Stoffstrom entlastet und der Strömungsverlauf verbessert. Die gedachte Verlängerung der Längsachse der Zuleitung 12 verläuft zusätzlich tangential zur Abspritzrichtung bzw. zur Achse 29. Der dadurch erzeugbare Drall des temperierten Stoffstroms beeinflußt die Zerstäubung, die gleichmäßige Verteilung des Kraftstoffes und die Wärmeaufnahme aus den Wandungen des Gehäuses 4 positiv.

Die Aufnahmevorrichtung 2 weist weiterhin ein scheibenähnliches Gehäuseoberteil 5 mit einer etwa mittig angebrachten runden Öffnung auf, durch welche die Zumeßeinrichtung 3 greift. Das Gehäuseoberteil 5 liegt ausschließlich mit einem an seiner Unterseite ausgebildeten hervorstehenden ringförmigem Auflagesitz 35 auf der dritten Schulter 34 des Isolierkörpers 6 auf. Die in diesem Bereich angebrachte Fase 31 verhindert eine direkte Berührung von Gehäuseoberteil 5 und Gehäuse 4 in diesem Bereich. Der Stützring 17 ist so dimensioniert und angeordnet, daß er ebenfalls nicht mit dem Gehäuseoberteil 5 in Berührung kommt. Das Gehäuseoberteil 5 wird mittels in diesem Ausführungsbeispiel als Schraube-Mutter-Element ausgeführten Fixierelementen 22, welche durch, parallel zur Achse 29 umfänglich im Gehäuseoberteil 5 angeordneten nicht dargestellten Öffnungen, und dazu jeweils paarweise in der dritten Schulter 34 angeordneten ebenfalls nicht dargestellten Öffnungen greifen, am Gehäuse 4 fixiert. Die der Oberseite des Gehäuseoberteils 5 zugewandte und die dem dritten Durchmesserabsatz 27 zugewandte Seite des Fixierelements 22 sind durch Isolationselemente 23, welche in diesem Ausführungsbeispiel als keramische Unterlegscheiben ausgeführt sind, vom Gehäuseoberteil 5 bzw. vom Gehäuse 4 thermisch isoliert. Der an der Unterseite des Gehäuseoberteils 5 ringförmige hervorstehende Auflagesitz 35 ist so dimensioniert bzw. steht soweit von der Unterseite des Gehäuseoberteils 5 hervor, daß das Gehäuseoberteil 5 das Gehäuse 4 nicht direkt berührt und so vom Gehäuse 4 durch einen zweiten Spalt 11 thermisch isoliert ist.

Die Fixierelemente 22 erzeugen einen Auflagedruck im Sitzbereich von dritter Schulter 34 und Auflagesitz 35, welcher sich auf die erste Dichtung 14 überträgt. Der Auflagedruck ist so groß, das Prozeßgase nicht vom Mischbereich 7 über eventuell vorhandene Spalten zwischen Isolierkörper 6 und Gehäuse 4 und über den zweiten Spalt 11 in die Umwelt entweichen können. Der die dritte Schulter 34 bildende, dünnwandige Außendurchmessereinzug des Isolierkörpers 6, welcher von der Zumeßeinrichtung 3 auf seiner Innenseite durch den ersten Spalt 10 getrennt ist, weist auf seiner der Innenseite des hervorstehenden Auflagesitzes 35 zugewandten Außenseite oben eine dritte Fase 39 auf. Eine zweite Fase 38 befindet sich an der Kante zwischen den Seiten des Auflagesitzes 35, welche dem dünnwandigen Außendurchmessereinzug des Isolierkörpers 6 und der dritten Schuler 34 zugewandt sind. Eine ringförmige zweite Dichtung 15, welche zwischen der zweiten Fase 38 und der dritten Fase 39 in den Auflagesitz 35 eingelassen ist, dichtet die Umwelt gegenüber Prozeßgasen ab, welche sonst aus dem Mischbereich 7 über den ersten Spalt 10, den in diesem Ausführungsbeispiel dichtungslos ausgeführten Auflagebereich zwischen dritter Schulter 34 und Auflagesitz 35, die Fase 31, am Stützring 17 vorbei durch den zweiten Spalt 11 entweichen könnten. Die Fasen 38 und 39 vermindern wärmeübertragende Flächenberührungen zwischen Isolierkörper 6 und Gehäuseoberteil 5 und erleichtern die Montage.

Das scheibenähnliche Gehäuseoberteil 5 mit seiner in etwa mittig angebrachten runden Öffnung weist im oberen umfänglichen Verlauf seiner Öffnung eine vierte Fase 40 auf. In etwa in der Mitte der Fase 40 ist eine ringförmige dritte Dichtung 16 eingelassen, auf welcher die Zumeßeinrichtung 3 mit einer zweiten Schulter 30 aufliegt. Eine Feder 20 welche über eine Abstandshülse 37 und einer Schraube 21 am

Gehäuseoberteil 5 befestigt ist, spannt die Zumeßeinrichtung 3 über eine erste Schulter 19 der Zumeßeinrichtung 3 gegen die dritte Dichtung 16. Ein ringförmiger Kühlkörper 18 umfaßt die Zumeßeinrichtung 3 zwischen der ersten und zweiten Schulter 19, 30 und dient zur passiven Wärmeabfuhr aus dem dort befindlichen Spulenbereich der Zumeßeinrichtung 3. Alternativ dazu kann beispielweise auch ein mit einem Kühlmittel durchströmter Kühlring eingesetzt werden.

Die wärmeisolierenden Maßnahmen, wie z.B. die dünnwandige Ausführung des reformernahen Bereichs des Gehäuses 4, den Isolierkörper 6, die Spalte 10 und 11 und den Einstich 13, sowie die durch die oberhalb des Mischbereiches 7 durch die Formgebung des Gehäuses 4 und des Gehäuseoberteils 5 bedingte Zunahme der der Umwelt zugewandten Oberfläche gegebene vergrößerte Wärmeabgabefläche, senken die Wärmebelastungen, insbesondere für die Zumeßeinrichtung 3, die erste Dichtung 14, die zweite Dichtung 15 und die dritte Dichtung 16. Insbesondere bei den Dichtungen 15, 16 ist es dadurch möglich, preisgünstigere und besser verarbeitbare Materialen auszuwählen, beispielsweise Elastomer.

Die Lage der Fixierelemente 22 an der dem nicht dargestellten Reformer abgewandten Seite des Gehäuses 4, welches an dieser Seite zudem die höchste Wärmeabgabefläche aufweist, tragen zur thermischen Isolierung des Gehäuseoberteils 5 bzw. der Zumeßeinrichtung 3 bei. Im weiteren kann auf eine aktive Kühlung im Bereich der nicht dargestellten Abspritzöffnung der Zumeßeinrichtung 3 verzichtet werden, wodurch der konstruktive Aufbau vereinfacht, zuverlässiger und kostengünstiger wird. Eine aktive Kühlung würde zudem die Wärmekapazität in der abspritzseitigen Umgebung der Zumeßeinrichtung 3 erhöhen, wodurch bei unzureichendem Wärmeangebot, beispielsweise bei Kaltstartbetrieb, der Kraftstoff über längere Zeit nur unzureichend verdampft werden könnte. Durch die wärmeisolierenden Maßnahmen wird außerdem die Wärmeaufnahme der Zerstäubungsanordnung 2 im Betrieb aus dem nicht dargestellten Reformer vermindert, wobei im Mischbereich 7 die Aufnahme von Wärme vom nicht dargestellten Reformer nur soweit vermindert ist, als sie zur Verdampfung des Kraftstoffes sicher ausreicht. Dies ist insbesondere in einer Kaltstartphase vorteilhaft.

Bohrungen 36 an den radialen Außenflächen des Gehäuseoberteils 5 ermöglichen die Befestigung der Zerstäubungseinrichtung 1 an anderen nicht dargestellten Aggregaten oder nicht dargestellten Bauteilen, wobei diese zur weiteren Verbesserung der Wärmeabgabe dienen können.

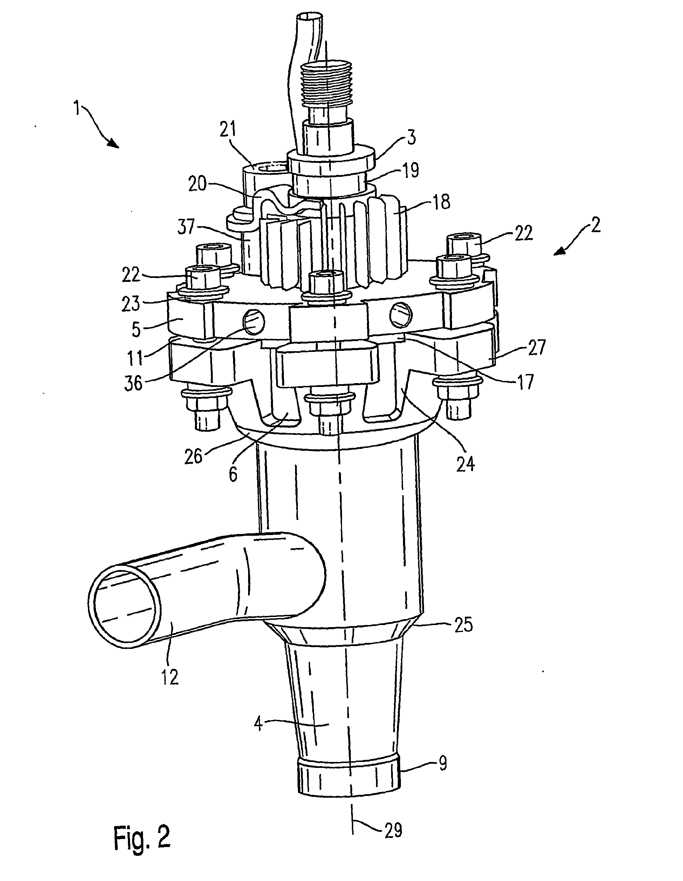

Fig. 2 zeigt das in der Fig. 1 dargestellte Ausführungsbeispiel in der Außenansicht um ca. 90° um die Achse 29 gedreht. Die in dieser Ansicht sichtbaren Ausnehmungen 24, welche in etwa gleichmäßigen Abständen umfänglich ab dem zweitem Durchmesserabsatz 26 nach oben, das Gehäuse 4 stellenweise öffnen, dienen zur Minimierung der Wärmeaustauschfläche zwischen Isolierkörper 6 und Gehäuse 4. Der zwischen Gehäuseoberteil 5 und Gehäuse 4 verlaufende Spalt 11 ist deutlich zu erkennen.

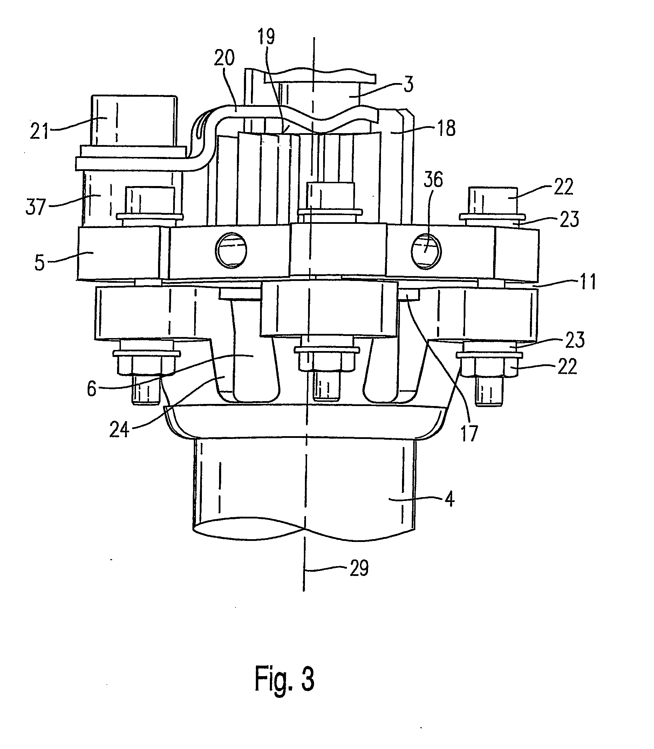

Fig. 3 zeigt das bereits in Fig. 1 und 2 dargestellte erfindungsgemäße Ausführungsbeispiel in einer Außenansicht im Bereich des Gehäuseoberteils 5. Wie in Fig. 2 sind in dieser Darstellung die Aussparungen 24 und der Spalt 11 deutlich zu erkennen. Der Stützring 17, welcher den oberen, dem Gehäuseoberteil 5 zugewandten Teil des Gehäuses 4 gegen radial wirkende Kräfte abstützt, beispielsweise verursacht durch die Fixierelemente 22, ist ebenfalls deutlich zu erkennen.

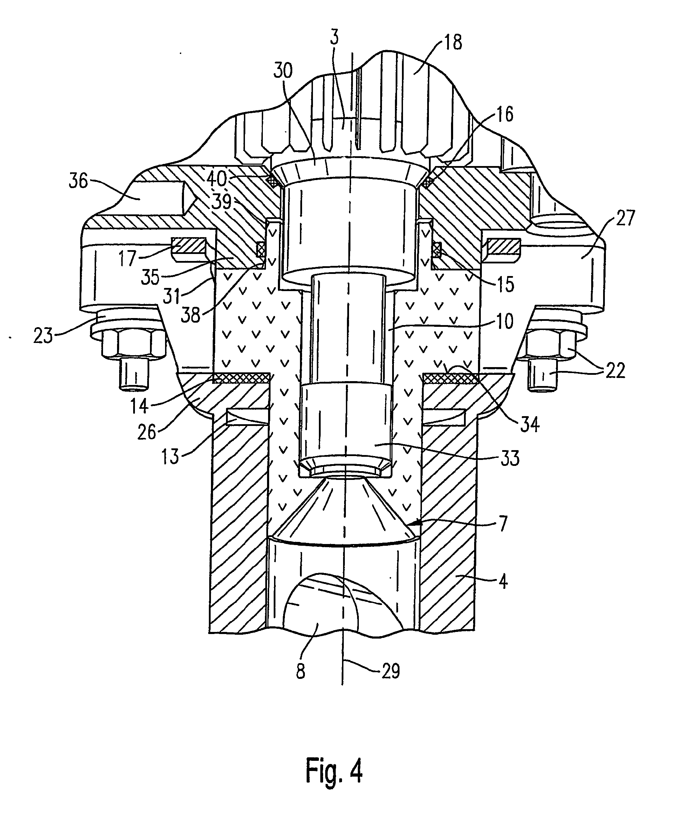

Fig. 4 zeigt in einer schematischen Schnittdarstellung im Bereich des Gehäuseoberteils 5 den Verlauf der ersten bis vierten Fase 31, 38, 39, 40 sowie den Verlauf der zweiten Schulter 30 besonders deutlich. So wird sichtbar, daß sich die zweite Schulter 30 konisch nach oben im Durchmesser vergrößert. Im Zusammenspiel mit der vierten Fase 40 erleichtert dies die Zentrierung der Zumeßeinrichtung 3 bei der Montage. Dadurch wird eine gleichmäßige Stärke des ersten Spalts 10 um die Zumeßeinrichtung 3 gewährleistet und die Abdichtung des ersten Spaltes 10 gegenüber der Umwelt sichergestellt.

## Patentansprüche

1. Zerstäubungsanordnung (1) für Kraftstoffe, insbesondere zum Eintrag in einen chemischen Reformer zur Gewinnung von Wasserstoff, mit zumindest einer in einer Aufnahmevorrichtung (2) aufgenommenen Zumeßeinrichtung (3) zum Zumessen von Kraftstoff in einen temperierten Stoffstrom, wobei die Zumeßeinrichtung (3) den Kraftstoff ohne Zwischenanordnung einer Zuführungsleitung unmittelbar in den temperierten Stoffstrom einbringt,
**dadurch gekennzeichnet,**
**daß** die Zumeßeinrichtung (3) von der Aufnahmevorrichtung (2) thermisch isoliert und durch einen ersten Spalt (10), der zwischen Zumeßeinrichtung (3) und Aufnahmevorrichtung (2) verläuft, isoliert ist.

2. Zerstäubungsanordnung nach Anspruch 1,
**dadurch gekennzeichnet,**
**daß** die Zumeßeinrichtung (3) eine oder mehrere Öffnungen zum Zumessen von Kraftstoff aufweist.

3. Zerstäubungsanordnung nach Anspruch 1 oder 2,
**dadurch gekennzeichnet,**
**daß** die Zumeßeinrichtung (3) ein Brennstoffeinspritzventil ist, welches den Kraftstoff dosiert und aufbereitet, insbesondere drallbehaftet, abspritzt.

4. Zerstäubungsanordnung nach Anspruch 3,
**dadurch gekennzeichnet,**
**daß** das Brennstoffeinspritzventil ein Hochdruckbrennstoffeinspritzventil ist, welches mit Kraftstoffdrücken von 20 bis 150 bar arbeitet.

5. Zerstäubungsanordnung nach einem der vorhergehenden Ansprüche,
**dadurch gekennzeichnet,**
**daß** der temperierte Stoffstrom durch die Aufnahmevorrichtung (2) strömt.

6. Zerstäubungsanordnung nach einem der vorhergehenden Ansprüche,
**dadurch gekennzeichnet,**
**daß** die Zumeßeinrichtung (3) durch einen Isolierkörper (6) thermisch isoliert ist.

7. Zerstäubungsanordnung nach Anspruch 6,
**dadurch gekennzeichnet,**
**daß** der Isolierkörper (6) wenigstens teilweise aus einem keramischen Material besteht.

8. Zerstäubungsanordnung nach Anspruch 6 oder 7,
**dadurch gekennzeichnet,**
**daß** die Zumeßeinrichtung (3) vom Isolierkörper (6) durch den ersten Spalt (10) isoliert ist.

9. Zerstäubüngsanordnung nach einem der Ansprüche 6 bis 8, **dadurch gekennzeichnet,**
**daß** der Isolierkörper (6) die Zumeßeinrichtung (3) lediglich zur Führung der Zumeßeinrichtung (3) gegenüber einer Achse berührt.

10. Zerstäubungsanordnung nach Anspruch 8 oder 9,
**dadurch gekennzeichnet,**
**daß** die Aufnahmevorrichtung (2) aus einem Gehäuse (4), durch welches der temperierte Stoffstrom strömt, und einem Gehäuseoberteil (5) besteht, welches das Gehäuse (4) nicht unmittelbar berührt.

11. Zerstäubungsanordnung nach Anspruch 10,
**dadurch gekennzeichnet,**
**daß** das Gehäuseoberteil (5) vom Gehäuse (4) durch einen zweiten Spalt (11) isoliert ist.

12. Zerstäubungsanordnung nach Anspruch 10 oder 11,
**dadurch gekennzeichnet,**
**daß** das Gehäuseoberteil (5) lediglich auf dem Isolierkörper (6) aufliegt.

13. Zerstäubungsanordnung nach Anspruch 10, 11 oder 12,
**dadurch gekennzeichnet,**
**daß** Fixierelemente (22) Gehäuse (4) und Gehäuseoberteil (5) gegeneinander fixieren.

14. Zerstäubungsanordnung nach Anspruch 13,
**dadurch gekennzeichnet,**
**daß** die Fixierelemente (22) durch Isolationselemente (23) von Gehäuse (4) und/oder Gehäuseoberteil (5) thermisch isoliert sind.

15. Zerstäubungsanordnung nach Anspruch 14,
**dadurch gekennzeichnet,**
**daß** die Isolationselemente (23) wenigstens teilweise aus einem keramischen Material bestehen.

16. Zerstäubungsanordnung nach einem der Ansprüche 10 bis 15,
**dadurch gekennzeichnet,**
**daß** lediglich das Gehäuseoberteil (5) die Zumeßeinrichtung (3) trägt.

17. Zerstäubungsanordnung nach einem der Ansprüche 10 bis 16,
**dadurch gekennzeichnet,**
**daß** eine dritte Dichtung (16) zwischen Zumeßeinrichtung (3) und Gehäuseoberteil (5) den ersten Spalt abdichtet.

18. Zerstäubungsanordnung nach Anspruch 17,
**dadurch gekennzeichnet,**
**daß** die dritte Dichtung (16) zumindest teilweise aus einem Elastomer besteht.

19. Zerstäubungsanordnung nach einem der vorhergehenden Ansprüche,
**dadurch gekennzeichnet,**
**daß** die Zumeßeinrichtung (3) Kraftstoff in einen Mischbereich (7) zumißt.

20. Zerstäubungsanordnung nach Anspruch 19,
**dadurch gekennzeichnet,**
**daß** der temperierte Stoffstrom über eine Zuleitung (12) dem Mischbereich (7) radial oder zumindest teilweise tangential zugeführt ist.

21. Zerstäubungsanordnung nach Anspruch 19 oder 20, **dadurch gekennzeichnet,**
**daß** der von der Zuleitung (12) dem Mischbereich (7) zugeführte temperierte Stoffstrom bei Eintritt in den Mischbereich (7) von der Zumeßeinrichtung (3) weggerichtet ist.

22. Zerstäubungsanordnung nach einem der Ansprüche 19 bis 21,
**dadurch gekennzeichnet,**
**daß** das Gehäuse (4) einen Einstich (13) zur Hemmung der Wärmeleitung aufweist.

23. Zerstäubungsanordnung nach einem der vorhergehenden Ansprüche,
**dadurch gekennzeichnet,**
**daß** die Außenfläche der Aufnahmevorrichtung (2) von einem Strömungsaustritt (9) ausgehend, stufenweise und/oder kontinuierlich, zunimmt.

24. Zerstäubungsanordnung nach einem der Ansprüche 19 bis 22,
**dadurch gekennzeichnet,**
**daß** die Außenfläche der Aufnahmevorrichtung (2) ab einem Mischbereich (7), entgegen der in ihm vorwiegenden Strömungsrichtung, zunimmt.

## Claims

1. Atomizer arrangement (1) for fuels, in particular for introducing into a chemical reformer for the recovery of hydrogen, having at least one metering device (3), which is held in a holding device (2), for metering fuel into a temperature-controlled substance flow, with the metering device (3) introducing the fuel directly into the temperature-controlled substance flow without the interposition of a supply line,
**characterized**
**in that** the metering device (3) is thermally insulated from the holding device (2) and is insulated by a first gap (10) which runs between the metering device (3) and the holding device (2).

2. Atomizer arrangement according to Claim 1,
**characterized**
**in that** the metering device (3) has one or more openings for metering fuel.

3. Atomizer arrangement according to Claim 1 or 2,
**characterized**
**in that** the metering device (3) is a fuel injection valve which ejects the fuel in a dosed and prepared fashion, in particular with swirl.

4. Atomizer arrangement according to Claim 3,
**characterized**
**in that** the fuel injection valve is a high-pressure fuel injection valve which operates with fuel pressures from 20 to 150 bar.

5. Atomizer arrangement according to one of the preceding claims,
**characterized**
**in that** the temperature-controlled substance flow flows through the holding device (2).

6. Atomizer arrangement according to one of the preceding claims,
**characterized**
**in that** the metering device (3) is thermally insulated by means of an insulating body (6).

7. Atomizer arrangement according to Claim 6,
**characterized**
**in that** the insulating body (6) is composed at least partially of a ceramic material.

8. Atomizer arrangement according to Claim 6 or 7,
**characterized**
**in that** the metering device (3) is insulated from the insulating body (6) by the first gap (10).

9. Atomizer arrangement according to one of Claims 6 to 8,
**characterized**
**in that** the insulating body (6) makes contact with the metering device (3) merely to guide the metering device (3) relative to an axis.

10. Atomizer arrangement according to Claim 8 or 9,
**characterized**
**in that** the holding device (2) is composed of a housing (4) through which the temperature-controlled substance flow flows, and of a housing upper part (5) which does not make direct contact with the housing (4).

11. Atomizer arrangement according to Claim 10,
**characterized**
**in that** the housing upper part (5) is insulated from the housing (4) by a second gap (11).

12. Atomizer arrangement according to Claim 10 or 11,
**characterized**
**in that** the housing upper part (5) rests only on the insulating body (6).

13. Atomizer arrangement according to Claim 10, 11 or 12,
**characterized**
**in that** fixing elements (22) fix the housing (4) and housing upper part (5) with respect to one another.

14. Atomizer arrangement according to Claim 13,
**characterized**
**in that** the fixing elements (22) are thermally insulated from the housing (4) and/or housing upper part (5) by insulation elements (23).

15. Atomizer arrangement according to Claim 14,
**characterized**
**in that** the insulation elements (23) are composed at least partially of a ceramic material.

16. Atomizer arrangement according to one of Claims 10 to 15,
**characterized**
**in that** only the housing upper part (5) bears the metering device (3).

17. Atomizer arrangement according to one of Claims 10 to 16,
**characterized**
**in that** a third seal (16) between the metering device (3) and the housing upper part (5) seals off the first gap.

18. Atomizer arrangement according to Claim 17,
**characterized**
**in that** the third seal (16) is composed at least partially of an elastomer.

19. Atomizer arrangement according to one of the preceding claims,
**characterized**
**in that** the metering device (3) meters fuel into a mixing region (7).

20. Atomizer arrangement according to Claim 19,
**characterized**
**in that** the temperature-controlled substance flow is supplied radially or at least partially tangentially to the mixing region (7) via a feed line (12).

21. Atomizer arrangement according to Claim 19 or 20,
**characterized**
**in that** the temperature-controlled substance flow supplied by the feed line (12) to the mixing region (7) is directed away from the metering device (3) upon entering the mixing region (7).

22. Atomizer arrangement according to one of Claims 19 to 21,
**characterized**
**in that** the housing (4) has a recess (13) for inhibiting heat conduction.

23. Atomizer arrangement according to one of the preceding claims,
**characterized**
**in that** the outer surface of the holding device (2) increases in size in a stepped and/or continuous fashion proceeding from a flow outlet (9).

24. Atomizer arrangement according to one of Claims 19 to 22,
**characterized**
**in that** the outer surface of the holding device (2) increases in size from a mixing region (7), counter to the flow direction prevailing in said mixing region.

## Revendications

1. Agencement atomiseur (1) pour carburants, en particulier pour l'injection dans un reformeur chimique pour l'obtention d'hydrogène, comprenant au moins un dispositif de dosage (3) reçu dans un dispositif de réception (2) pour doser du carburant dans un flux de matière mis en température, le dispositif de dosage (3) introduisant le carburant sans agencement intermédiaire avec une conduite d'amenée directement dans le flux de matière mis en température,
**caractérisé en ce que**
le dispositif de dosage (3) est isolé thermiquement du dispositif de réception (2) et est isolé par une première fente (10) qui s'étend entre le dispositif de dosage (3) et le dispositif de réception (2).

2. Agencement atomiseur selon la revendication 1,
**caractérisé en ce que**
le dispositif de dosage (3) présente une ou plusieurs ouvertures pour le dosage de carburant.

3. Agencement atomiseur selon la revendication 1 ou 2,
**caractérisé en ce que**
le dispositif de dosage (3) est une soupape d'injection de carburant qui dose le carburant et le prépare, et notamment le pulvérise en lui conférant un mouvement de tourbillon.

4. Agencement atomiseur selon la revendication 3, **caractérisé en ce que**
la soupape d'injection de carburant est une soupape d'injection de carburant à haute pression qui fonctionne à des pressions de carburant de 20 à 150 bar.

5. Agencement atomiseur selon l'une quelconque des revendications précédentes,
**caractérisé en ce que**
le flux de matière mis en température s'écoule à travers le dispositif de réception (2).

6. Agencement atomiseur selon l'une quelconque des revendications précédentes,
**caractérisé en ce que**
le dispositif de dosage (3) est isolé thermiquement par un corps isolant (6).

7. Agencement atomiseur selon la revendication 6,
**caractérisé en ce que**
le corps isolant (6) se compose au moins en partie d'un matériau céramique.

8. Agencement atomiseur selon la revendication 6 ou 7,
**caractérisé en ce que**
le dispositif de dosage (3) est isolé du corps isolant (6) par la première fente (10).

9. Agencement atomiseur selon l'une quelconque des revendications 6 à 8,
**caractérisé en ce que**
le corps isolant (6) vient en contact avec le dispositif de dosage (3) uniquement pour le guidage du dispositif de dosage (3) par rapport à un axe.

10. Agencement atomiseur selon la revendication 8 ou 9,
**caractérisé en ce que**
le dispositif de réception (2) se compose d'un boîtier (4), à travers lequel s'écoule le flux de matière mis en température, et d'une partie supérieure de boîtier (5), qui n'est pas en contact direct avec le boîtier (4).

11. Agencement atomiseur selon la revendication 10,
**caractérisé en ce que**
la partie supérieure de boîtier (5) est isolée du boîtier (4) par une deuxième fente (11).

12. Agencement atomiseur selon la revendication 10 ou 11,
**caractérisé en ce que**
la partie supérieure de boîtier (5) repose seulement sur le corps isolant (6).

13. Agencement atomiseur selon la revendication 10, 11 ou 12,
**caractérisé en ce que**
des éléments de fixation (22) fixent l'un contre l'autre le boîtier (4) et la partie supérieure de boîtier (5).

14. Agencement atomiseur selon la revendication 13,
**caractérisé en ce que**
les éléments de fixation (22) sont isolés thermiquement du boîtier (4) et/ou de la partie supérieure de boîtier (5) par des éléments d'isolation (23).

15. Agencement atomiseur selon la revendication 14,
**caractérisé en ce que**
les éléments d'isolation (23) se composent au moins en partie d'un matériau céramique.

16. Agencement atomiseur selon l'une quelconque des revendications 10 à 15,
**caractérisé en ce que**
seulement la partie supérieure de boîtier (5) porte le dispositif de dosage (3).

17. Agencement atomiseur selon l'une quelconque des revendications 10 à 16,
**caractérisé en ce**
**qu'**une troisième garniture d'étanchéité (16) entre le dispositif de dosage (3) et la partie supérieure de boîtier (5) étanchéifie la première fente.

18. Agencement atomiseur selon la revendication 17,
**caractérisé en ce que**
la troisième garniture d'étanchéité (16) se compose au moins en partie d'un élastomère.

19. Agencement atomiseur selon l'une quelconque des revendications précédentes,
**caractérisé en ce que**
le dispositif de dosage (3) dose du carburant dans une région de mélange (7).

20. Agencement atomiseur selon la revendication 19,
**caractérisé en ce que**
le flux de matière mis en température est acheminé par le biais d'une conduite d'amenée (12) radialement ou au moins en partie tangentiellement à la région de mélange (7).

21. Agencement atomiseur selon la revendication 19 ou 20,
**caractérisé en ce que**
le flux de matière mis en température acheminé par la conduite d'amenée (12) à la région de mélange (7) est orienté à l'écart du dispositif de dosage (3) lorsqu'il entre dans la région de mélange (7).

22. Agencement atomiseur selon l'une quelconque des revendications 19 à 21,
**caractérisé en ce que**
le boîtier (4) présente une encoche (13) pour bloquer la conduite de chauffage.

23. Agencement atomiseur selon l'une quelconque des revendications précédentes,
**caractérisé en ce que**
la surface extérieure du dispositif de réception (2) augmente, à partir d'une sortie d'écoulement (9), par étages et/ou en continu.

24. Agencement atomiseur selon l'une quelconque des revendications 19 à 22,
**caractérisé en ce que**
la surface extérieure du dispositif de réception (2) augmente, à partir d'une région de mélange (7), à l'encontre de la direction d'écoulement qui lui est principale.
